# EUROPÄISCHE PATENTANMELDUNG

(11) **EP 3 917 103 A1**
(43) Veröffentlichungstag der Anmeldung: **01.12.2021**
(21) Anmeldenummer: 20177407.2
(22) Anmeldetag: 29.05.2020
(51) Int. Cl.: H04L 29/06, H04L 9/08, H04L 9/32

(54) **VERFAHREN, SYSTEM, SENDER UND EMPFÄNGER ZUM AUTHENTIFIZIEREN EINES SENDERS**

(71) Anmelder: Siemens Aktiengesellschaft, 80333 München (DE)
(72) Erfinder: Fries, Steffen, 85598 Baldham (DE); Güttinger, Andreas, 90765 Fürth (DE); Lambio, Marco, 90552 Röthenbach a. d. Pegnitz (DE)

(57) **Zusammenfassung**

Verfahren, System, Sender und Empfänger zum Authentifizieren eines Senders, wobei die Authentifizierung mittels Verwendung eines asymmetrischen Schlüsselpaares und der Verwendung einer digitalen Signatur erfolgt.

## Beschreibung

Die Erfindung bezieht sich auf ein Verfahren, ein System, Sender und einen Empfänger zum Authentifizieren eines Senders.

Aufgabe der Erfindung ist es, zu bestehenden Lösungen eine Alternative bereitzustellen.

Nachfolgend werden Aspekte der Erfindung erläutert.

Gemäß einem ersten Aspekt betrifft die Erfindung ein System aufweisend:
- einen Sender umfassend:
   - einen Sicherheitsspeicher, wobei
      - der Sicherheitsspeicher dazu eingerichtet ist, ein asymmetrisches Schlüsselpaar zu speichern,
      - das asymmetrische Schlüsselpaar einen öffentlichen Schlüssel und einen privaten Schlüssel umfasst;
   - ein Nutzeridentifikationsgenerierungsmodul, wobei
      - das Nutzeridentifikationsgenerierungsmodul dazu eingerichtet ist, eine Nutzeridentifikation anhand von Anmeldedaten zu erzeugen,
      - die Anmeldedaten den öffentlichen Schlüssel und/oder Zertifikatsdaten eines digitalen Zertifikats umfassen;
   - ein Passwortgenerierungsmodul, wobei
      - das Passwortgenerierungsmodul dazu eingerichtet ist, eine digitale Signatur über die Nutzeridentifikation unter Verwendung des privaten Schlüssels zu berechnen,
      - das Passwortgenerierungsmodul dazu eingerichtet ist, einen Passwortdatensatz anhand der digitalen Signatur zu erzeugen;
   - ein Authentisierungsanfragemodul, wobei
      - das Authentisierungsanfragemodul dazu eingerichtet ist, eine Authentisierungsanfragenachricht zu erzeugen,
      - die Authentisierungsanfragenachricht die Nutzeridentifikation und den Passwortdatensatz umfasst;
   - ein erstes Kommunikationsmodul, wobei das erste Kommunikationsmodul dazu eingerichtet ist, die Authentisierungsanfragenachricht an einen Empfänger zu übermitteln;
- den Empfänger umfassend:
   - ein zweites Kommunikationsmodul, wobei das zweite Kommunikationsmodul dazu eingerichtet ist, die Authentisierungsanfragenachricht von dem Sender zu empfangen;
   - ein Überprüfungsmodul, wobei
      - das Überprüfungsmodul dazu eingerichtet ist, ein Prüfergebnis für die digitale Signatur des Passwortdatensatzes anhand der Nutzeridentifikation zu ermitteln;
   - ein Authentifizierungsmodul, wobei
      - das Authentifizierungsmodul dazu eingerichtet ist, anhand des Prüfergebnisses mit einer Authentifizierungsnachricht den Sender zu authentifizieren.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computer implementiert" zu verstehen.

Unter einem Prozessor oder programmierbaren Prozessor kann im Zusammenhang mit der Erfindung beispielsweise eine elektronische Schaltung verstanden werden. Insbesondere kann es sich dabei um eine integrierte Digitalschaltung handeln. Ein Prozessor kann insbesondere einen Hauptprozessor (engl. Central Processing Unit, CPU), einen Mikroprozessor oder einen Mikrokontroller, einen Crypto-Prozessor zur Durchführung von kryptographischen Operationen, einen AI-Prozessor (AI: artificial intelligence) zur Durchführung einer Inferenz für ein künstliches neuronales Netzwerk oder einen digitalen Signalprozessor, möglicherweise in Kombination mit einer Speichereinheit zum Speichern von Programmbefehlen etc. umfassen. Bei einem Prozessor kann es sich beispielsweise auch um einen IC (integrierter Schaltkreis (engl. Integrated Circuit)), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder eine Signalverarbeitungseinheit oder einen Grafikprozessor GPU (Graphic Processing Unit) handeln. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert. Ein integrierter Halbleiterbaustein kann z. B. ein Digital-Halbleiterbaustein, ein Mixed-Signal-Halbleiterbaustein, ein MEMS-Halbleiterbaustein oder ein integrierter Analog-Halbleiterbaustein oder ein Transistor-Halbleiterbaustein mit integrierten Steuer- oder Schutzfunktionen sein.

Unter einem "Modul" kann im Zusammenhang mit der Erfindung beispielsweise ein Prozessor und/oder ein Speicher des Prozessors zum Speichern von Programmbefehlen verstanden werden. Beispielsweise ist die Schaltung speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder zu realisieren.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einem Speicher gespeichert ist) verstanden werden.

Die Erfindung ist dahingehend vorteilhaft, dass mittels der vorgeschlagenen Lösung vorhandenes asymmetrisches Schlüsselmaterial z. B. für eine bestehende Authentisierung mit Username und Passwort genutzt werden. Das Verfahren setzt dabei z. B. auf schon vorhandenen Kommunikationsprotokollen und Mechanismen auf und ersetzt beispielsweise die Generierung und Validierung der Authentisierungsparameter. Dieser Ansatz kann insbesondere bei der Migration zu neuen aktuell genutzten Authentisierungsmethoden genutzt werden, oder wenn eine lokale Implementierung der Anbindung an ein Hardware Security Modul zur Nutzung des vorhandenen asymmetrischen Schlüsselmaterials die direkte Anwendung wie in einem spezifizierten Protokoll verhindert. Die Sicherheit des generellen Username/Passwort Verfahrens lässt sich z. B. hierbei durch die Verwendung dynamischer Parameter weiter erhöhen.

Insbesondere ermöglicht dieser Ansatz z. B. eine Nutzung zertifikatsbasierter Authentisierung im Kontext des http Protokolls.

Bei einer Ausführungsformen des Systems umfassen die Anmeldedaten das digitale Zertifikat oder den Fingerprint (Prüfsumme) des digitalen Zertifikates oder die Seriennummer eines Zertifikates gemeinsam mit der Information zum Aussteller.

Bei weiteren Ausführungsformen des Systems umfassen die Anmeldedaten Anmeldezusatzparameter, wobei die Anmeldezusatzparameter einen Zeitstempel und/oder eine Nonce oder/und gerätespezifischer Senderparameter umfassen.

Bei weiteren Ausführungsformen des Systems werden die Anmeldedaten durch den Sender berechnet, wobei die Anmeldedaten unter der Berücksichtigung eines Zeitstempels und/oder einer Nonce oder/und gerätespezifischer Senderparameters gebildet werden und wobei beispielsweise die Anmeldedaten spezifisch für eine entsprechende Authentisierungsanfragenachricht neu berechnet werden.

Bei weiteren Ausführungsformen des Systems ist das digitale Zertifikat ein digitales Zertifikat für den öffentlichen Schlüssel.

Bei weiteren Ausführungsformen des Systems umfasst der Passwortdatensatz passworterzeugungsspezifische Zusatzparameter und/oder die digitale Signatur wird unter Berücksichtigung zumindest eines Teils der Zusatzparameter berechnet, wobei die passworterzeugungsspezifischen Zusatzparameter Angaben über einen Hash-Algorithmus der digitalen Signatur und/oder ein Paddingschema der digitalen Signatur und/oder einen Zeitstempel umfassen.

Bei weiteren Ausführungsformen des Systems sind der Sender und der Empfänger zeitsynchronisiert.

Bei weiteren Ausführungsformen des Systems werden zusätzlich bei der Ermittlung des Prüfergebnisses der Zeitstempel und/oder die gerätespezifischen Senderparameter und/oder die Zertifikatsdaten überprüft.

Gemäß einem weiteren Aspekt betrifft die Erfindung Sender aufweisend:
- einen Sicherheitsspeicher, wobei
   - der Sicherheitsspeicher dazu eingerichtet ist, ein asymmetrisches Schlüsselpaar zu speichern,
   - das Schlüsselpaar einen öffentlichen Schlüssel und einen privaten Schlüssel umfasst;
- ein Nutzeridentifikationsgenerierungsmodul, wobei
   - das Nutzeridentifikationsgenerierungsmodul dazu eingerichtet ist, eine Nutzeridentifikation anhand von Anmeldedaten zu erzeugen,
   - die Anmeldedaten den öffentlichen Schlüssel und/oder Zertifikatsdaten eines digitalen Zertifikats umfassen;
- ein Passwortgenerierungsmodul, wobei
   - das Passwortgenerierungsmodul dazu eingerichtet ist, eine digitale Signatur über die Nutzeridentifikation unter Verwendung des privaten Schlüssels zu berechnen,
   - das Passwortgenerierungsmodul dazu eingerichtet ist, einen Passwortdatensatz der digitalen Signatur zu erzeugen;
- ein Authentisierungsanfragemodul, wobei
   - das Authentisierungsanfragemodul dazu eingerichtet ist, eine Authentisierungsanfragenachricht zu erzeugen,
   - die Authentisierungsanfragenachricht die Nutzeridentifikation und den Passwortdatensatz umfasst;
- ein erstes Kommunikationsmodul, wobei das erste Kommunikationsmodul dazu eingerichtet ist, die Authentisierungsanfragenachricht an einen Empfänger zu übermitteln.

Gemäß einem weiteren Aspekt betrifft die Erfindung Empfänger aufweisend:
- ein zweites Kommunikationsmodul, wobei
   - das zweite Kommunikationsmodul dazu eingerichtet ist, eine Authentisierungsanfragenachricht von einem Sender zu empfangen,
   - die Authentisierungsanfragenachricht eine Nutzeridentifikation und einen Passwortdatensatz umfasst;
- ein Überprüfungsmodul, wobei
   - das Überprüfungsmodul dazu eingerichtet ist, ein Prüfergebnis für die digitale Signatur des Passwortdatensatzes anhand der Nutzeridentifikation zu ermitteln;
- ein Authentifizierungsmodul, wobei
   - das Authentifizierungsmodul dazu eingerichtet ist, anhand des Prüfergebnisses mit einer Authentifizierungsnachricht den Sender zu authentifizieren.

Gemäß einem weiteren Aspekt betrifft die Erfindung ein computerimplementiertes Verfahren zum Authentisieren eines Senders mit folgenden Schritten:
- Speichern eines asymmetrischen Schlüsselpaars, wobei das Schlüsselpaar einen öffentlichen Schlüssel und einen privaten Schlüssel umfasst;
- Erzeugen einer Nutzeridentifikation anhand von Anmeldedaten, wobei die Anmeldedaten den öffentlichen Schlüssel und/oder Zertifikatsdaten eines digitalen Zertifikats umfassen;
- Berechnen einer digitalen Signatur über die Nutzeridentifikation unter Verwendung des privaten Schlüssels, wobei ein Passwortdatensatz anhand der digitalen Signatur erstellt wird;
- Erzeugen einer Authentisierungsanfragenachricht, wobei die Authentisierungsanfragenachricht die Nutzeridentifikation und den Passwortdatensatz umfasst;
- Übermitteln der Authentisierungsanfragenachricht an einen Empfänger.

Bei weiteren Ausführungsformen des Verfahrens umfasst das Verfahren weitere Verfahrensschritte oder Merkmale, um die funktionalen Merkmale des Senders oder um weitere Merkmale des Senders, bzw. dessen Ausführungsformen, zu realisieren.

Gemäß einem weiteren Aspekt betrifft die Erfindung ein computerimplementiertes Verfahren zum Authentifizieren eines Senders mit folgenden Schritten:
- Empfangen einer Authentisierungsanfragenachricht von einem Sender, wobei die Authentisierungsanfragenachricht eine Nutzeridentifikation und einen Passwortdatensatz umfasst;
- Ermitteln eines Prüfergebnisses für die digitale Signatur des Passwortdatensatzes anhand der Nutzeridentifikation;
- Authentifizieren des Senders anhand des Prüfergebnisses mittels einer Authentifizierungsnachricht.

Bei weiteren Ausführungsformen des Verfahrens umfasst das Verfahren weitere Verfahrensschritte oder Merkmale, um die funktionalen Merkmale des Empfängers oder um weitere Merkmale des Empfängers, bzw. dessen Ausführungsformen, zu realisieren.

Gemäß einem weiteren Aspekt betrifft die Erfindung ein computerimplementiertes Verfahren, welches das computerimplementierte Verfahren zum Authentisieren eines Senders und das computerimplementierte Verfahren zum Authentifizieren des Senders umfasst.

Bei weiteren Ausführungsformen des Verfahrens umfasst das Verfahren weitere Verfahrensschritte oder Merkmale, um die funktionalen Merkmale des Systems oder um weitere Merkmale des Systems, bzw. dessen Ausführungsformen, zu realisieren.

Des Weiteren wird ein Computerprogrammprodukt mit Programmbefehlen zur Durchführung eines der genannten erfindungsgemäßen Verfahren (oder eine Kombination der Verfahren) beansprucht, wobei mittels des Computerprogrammprodukts das entsprechende erfindungsgemäße Verfahren durchführbar wird. Unter Computerprogrammprodukt mit Programmbefehlen zur Durchführung des entsprechenden erfindungsgemäßen Verfahrens kann z. B. auch eine Digitalschaltungsbeschreibung, z. B. ein RTL-Code (RTL: Register Transfer Logic) in Form von VHDL-Code oder Verilog-Code, oder eine Netzliste oder Geometriedaten zur Produktion einer Halbleitervorrichtung, z. B. GDSII-Daten, verstanden werden.

Zusätzlich wird eine Variante des Computerprogrammproduktes mit Programmbefehlen zur Konfiguration eines Erstellungsgeräts, wie beispielsweise eines 3D-Druckers, eines Computersystems oder einer zur Erstellung von Prozessoren und/oder Geräten geeigneten Herstellungsmaschine beansprucht, wobei das Erstellungsgerät mit den Programmbefehlen derart konfiguriert wird, dass das genannte erfindungsgemäße System und/oder der Empfänger und/oder der Sender erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße System und/oder den Sender und/oder den Empfänger erstellt.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung.

In den Figuren sind funktionsgleiche Elemente mit denselben Bezugszeichen versehen, sofern nichts anderes angegeben ist. Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen, vorzugsweise ausschließlich durch Spezialhardware (z. B. einem Prozessor in Form eines ASIC oder FPGA) und/oder ein anderer Teil durch die (prozessor- und/oder speichergestützte) Software, bewirkt wird. Eine Kombination aus Hardware(komponenten) und Software(komponenten) kann beispielsweise auch durch eine in Software simulierte Hardware realisiert werden.

Insbesondere ist es, angesichts der hohen Anzahl an unterschiedlichen Realisierungsmöglichkeiten, unmöglich und auch für das Verständnis der Erfindung nicht zielführend oder notwendig all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

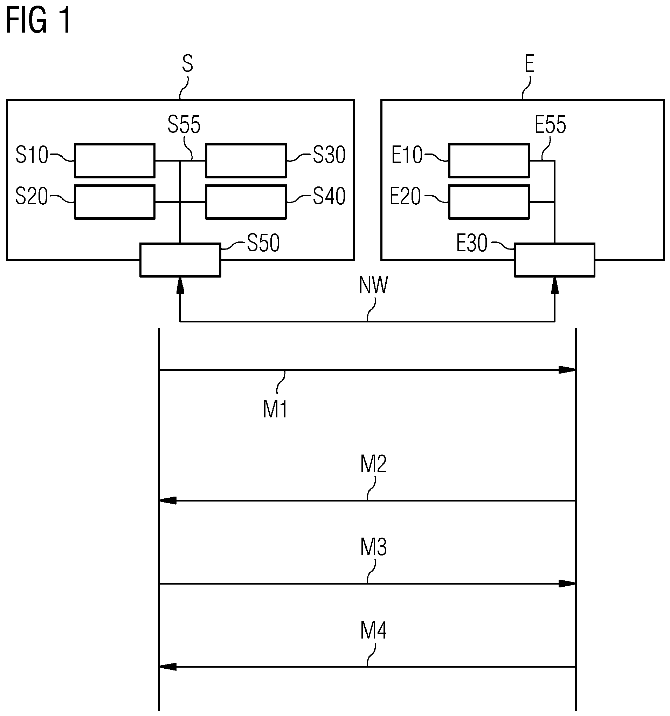

Fig. 1 zeigt eine schematische Darstellung des Systems X, wobei das System X einen Sender S und einen Empfänger E umfasst.

Der Sender S umfasst dabei beispielsweise einen Sicherheitsspeicher S10 (z. B. einen manipulationsgeschützten Speicher/tamper-proof memory unit), ein Nutzeridentifikationsgenerierungsmodul S20, ein Passwortgenerierungsmodul S30, ein Authentisierungsanfragemodul S40 und ein erstes Kommunikationsmodul (z. B. ein Mobilfunkmodul, ein kabelloses Netzwerkmodul (z. B. ein W-Lan Modul) oder eine kabelgebundenes Netzwerkmodul (z. B. ein Ethernetmodul)) S50, die über einen Bus S55 (z. B. einen PCI-Bus oder einen PCIe-Bus) kommunikativ miteinander verbunden sind. Die Module können z. B. auch als separate Module (z. B. als Smartcard, USB-Gerät) realisiert sein und z. B. über den Bus S55 und über eine Datenschnittstelle (z. B. SmartCard/USB-Schnittstelle) mit dem Sender kommunikativ verbunden sein.

Der Empfänger E umfasst dabei beispielsweise ein zweites Kommunikationsmodul E10 (z. B. ein Mobilfunkmodul, ein kabelloses Netzwerkmodul (z. B. ein W-Lan Modul) oder eine kabelgebundenes Netzwerkmodul (z. B. ein Ethernetmodul)), ein Überprüfungsmodul E20, ein Authentifizierungsmodul E30, die über einen Bus E55 (z. B. einen PCI-Bus oder einen PCIe-Bus) kommunikativ miteinander verbunden sind.

Der Sender S und der Empfänger E sind beispielsweise über ein Kommunikationsnetzwerk NW miteinander verbunden (z. B. Internet, WAN, LAN oder ein Mobilfunknetz).

Der Sicherheitsspeicher S10 ist dazu eingerichtet, ein asymmetrisches Schlüsselpaar zu speichern, wobei das Schlüsselpaar einen öffentlichen Schlüssel und einen privaten Schlüssel umfasst.

Das Nutzeridentifikationsgenerierungsmodul S20 ist dazu eingerichtet, eine Nutzeridentifikation anhand von Anmeldedaten zu erzeugen, wobei die Anmeldedaten den öffentlichen Schlüssel und/oder Zertifikatsdaten eines digitalen Zertifikats C_A umfassen. Der öffentliche Schlüssel kann dabei beispielsweise zum digitalen Zertifikat passen, sodass dieses durch den öffentlichen Schlüssel überprüft werden kann.

Das Passwortgenerierungsmodul S30 ist dazu eingerichtet, eine digitale Signatur über die Nutzeridentifikation unter Verwendung des privaten Schlüssels zu berechnen, wobei das Passwortgenerierungsmodul dazu eingerichtet ist, einen Passwortdatensatz (anhand) der digitalen Signatur zu erzeugen.

Das Authentisierungsanfragemodul S40 ist dazu eingerichtet, eine Authentisierungsanfragenachricht zu erzeugen, wobei die Authentisierungsanfragenachricht die Nutzeridentifikation und den Passwortdatensatz umfasst.

Das erste Kommunikationsmodul S50 ist dazu eingerichtet, die Authentisierungsanfragenachricht an einen Empfänger zu übermitteln.

Das zweite Kommunikationsmodul E10 ist dazu eingerichtet, eine Authentisierungsanfragenachricht von dem Sender S zu empfangen, wobei die Authentisierungsanfragenachricht die Nutzeridentifikation und den Passwortdatensatz umfasst.

Das Überprüfungsmodul E20 ist dazu eingerichtet, ein Prüfergebnis für die digitale Signatur des Passwortdatensatzes anhand der Nutzeridentifikation zu ermitteln.

Das Authentifizierungsmodul E30 ist dazu eingerichtet, anhand des Prüfergebnisses mit einer Authentifizierungsnachricht den Sender zu authentifizieren.

In einer weiteren Variante umfasst der Passwortdatensatz passworterzeugungsspezifische Zusatzparameter und/oder die digitale Signatur wird unter Berücksichtigung zumindest eines Teils der Zusatzparameter berechnet, wobei die passworterzeugungsspezifischen Zusatzparameter Angaben über einen Hash-Algorithmus der digitalen Signatur und/oder ein Paddingschema der digitalen Signatur und/oder einen Zeitstempel TS umfassen.

In einer weiteren Variante umfassen die Anmeldedaten Anmeldezusatzparameter, wobei die Anmeldezusatzparameter einen Zeitstempel TS und/oder eine Nonce N oder/und gerätespezifischer Senderparameter umfassen. Die Anmeldezusatzparameter könne beispielsweise auch die passworterzeugungsspezifische Zusatzparameter umfassen.

In einer weiteren Variante umfassen die Zertifikatsdaten das digitale Zertifikat C_A und/oder eine Seriennummer SN_C_A des digitalen Zertifikats C_A oder/und einen Zeitstempel TS und/oder eine Nonce N oder/und gerätespezifischer Senderparameter und/oder einen Fingerprint des digitalen Zertifikats, wie eine Prüfsumme.

In einer weiteren Variante werden die Anmeldedaten durch den Sender berechnet, wobei die Anmeldedaten unter der Berücksichtigung eines Zeitstempels TS und/oder einer Nonce N oder/und gerätespezifischer Senderparameter gebildet werden und wobei beispielsweise die Anmeldedaten spezifisch für eine entsprechende Authentisierungsanfragenachricht neu berechnet werden.

In einer weiteren Variante ist das digitale Zertifikat C_A ein digitales Zertifikat für den öffentlichen Schlüssel.

In einer weiteren Variante werden zusätzlich bei der Ermittlung des Prüfergebnisses durch den Empfänger der Zeitstempel TS und/oder die gerätespezifischen Senderparameter und/oder die Zertifikatsdaten überprüft.

Mittels der Erfindung kann beispielsweise die HTTP Basic Access Authentication mit asymmetrischen Methoden durchgeführt werden.

Bei der konventionellen HTTP Basic Access Authentication versucht z. B. ein Sender (hier z. B. auch als Client bezeichnet) über eine Anfrage auf eine Ressource auf einem Empfänger (hier z. B. auch als Server bezeichnet) zuzugreifen, für die eine Sender Authentisierung notwendig ist. Der Empfänger signalisiert dies über eine "401 unauthorized" Nachricht, indem die entsprechende Authentisierungsmethode signalisiert wird. Der Sender generiert nun basierend auf dem vorhandenen Usernamen und Password den entsprechenden Parameter, der dann bei der nächsten Anfrage im Authorization Header mitgeschickt wird. Der Parameter wird dabei wie folgt nach RFC 2617 konstruiert:

```
      basic-credentials = base64-user-pass
      base64-user-pass = <base64 encoding of user-pass,
                           except not limited to 76
                           char/line>
      user-pass = userid ":" password
      userid = *<TEXT excluding ":">
      password = *TEXT
```

Da die base64 Kodierung zum einen leicht aufgelöst werden kann, zum anderen auch kein dynamisches Datum enthält, kann ein Angreifer die erforderlichen Credentials leicht abhören, dekodieren und entsprechend missbrauchen. Daher ist es für das konventionelle Verfahren empfohlen, nur mit einer darunterliegenden TLS Verbindung und dazugehöriger Server Authentisierung zu verwenden, d. h. die HTTP Basic Authentication soll nur durch diesen Tunnel erfolgen. Mithilfe beider Verfahren (TLS Server Authentication und HTTP Basic Authentication) wird eine defacto mutual Authentication beider Kommunikationspartner erreicht. Die Kombination verbindet die Server Authentisierung auf der Transportschicht unter Nutzung von X.509 Zertifikaten und die Nutzer (z. B. Sender/Client) Authentisierung auf der Anwendungsschicht, basierend auf einer Nutzerkennung und einem dazugehörigen Passwort.

Nachteilig ist das konventionelle Verfahren dahingehend, dass eine zertifikatsbasierte Authentisierung im Kontext des http Protokolls nicht ermöglicht wird. Auch ist es nicht möglich, bestehende Systeme auf neue Authentisierungsmethoden zu migrieren. Zudem ist es mit dem konventionellen Verfahren nicht möglich, die Sicherheit des generellen Username/Passwort Verfahrens zu erhöhen.

Im erfindungsgemäßen System umfasst der Sender (Client) das asymmetrische Schlüsselpaar (PubKeyA, PrivKeyA).

In einer Variante kann der Sender ein Zertifikat C A für den öffentlichen Schlüssel umfassen. Das Zertifikat ist z. B. nach dem Standard ITU-T X.509 aufgebaut und besitzt beispielsweise eine Seriennummer SN_C_A. Zur Integration können die vorhandenen Parameter beispielsweise im Schema anders belegt werden.

Nachfolgend wird beispielhaft eine Ermittlung der Nutzeridentifikation (z. B. eines Nutzernamens/Usernames) erläutert, wobei die Nutzeridentifikation selbst als Struktur wie folgt aufgebaut ist und dabei den Parameter "userid" aus dem konventionellen Verfahren ersetzt:

```
    Nutzeridentifikation = base64(Anmeldedaten) "|"
                              Anmeldezusatzparameter
```

Der Parameter Anmeldedaten (z. B. Credentials) wird dabei z. B. base64 encoded und kann mit Anmeldezusatzparametern erweitert werden. Dabei wird z. B. das Pipe Symbol "|"als Trennzeichen der verschiedenen Parameter verwendet (":" ist z. B. per RFC 2617 für den Usernamen nicht erlaubt). Die Verwendung von Anmeldezusatzparametern kann optional behandelt werden.

Der Passwortdatensatz ersetzt beispielsweise den Parameter "password" aus dem konventionellen Verfahren. Der Passwortdatensatz ist dabei beispielsweise ebenfalls als Struktur ausgebildet und setzt sich aus der eigentlichen Signatur und den passworterzeugungsspezifische Zusatzparameter zusammen. Diese passworterzeugungsspezifischen Zusatzparameter können z. B. den gewählten Hash-Algorithmus und/oder das Paddingschema und/oder weitere Parameter (param1, param2) umfassen.

Im Kontext des Passwortdatensatz ist z. B. das Trennzeichen ":" nach RFC 2617 erlaubt und kann beispielsweise bei einer Implementierung entsprechend dieses Standards verwendet werden.

Der Passwortdatensatz setzt sich beispielsweise wie folgt zusammen :

```
    password = paraml ":" param2 ":"
```

base64 (sig[Nutzeridentifikation], PrivKeyA)

Die Signatur berechnet sich z. B. als digitale Signatur über den Parameter Nutzeridentifikation unter Anwendung des privaten Schlüssels (PrivKeyA). Diese Information wird im Anschluss beispielsweise base64 kodiert.

Je nach vorhandenem Schlüsselmaterial kann die Berechnung der digitalen Signatur z. B. mit RSA oder ECDSA durchgeführt werden.

Mittels der vorgeschlagenen Lösung kann auch Mithilfe von vorhandenem asymmetrischen Schlüsselmaterial eine bestehende Authentisierung mit Username und Passwort genutzt werden. Das Verfahren setzt dabei auf schon vorhandenen Kommunikationsprotokollen und Mechanismen auf und ersetzt nur die Generierung und Validierung der Authentisierungsparameter. Dieser Ansatz kann insbesondere bei der Migration zu neuen aktuell genutzten Authentisierungsmethoden genutzt werden, oder wenn eine lokale Implementierung der Anbindung an ein Hardware Security Modul die direkte Anwendung wie in einem spezifizierten Protokoll verhindert. Die Sicherheit des generellen Username/Passwort Verfahrens lässt sich hierbei durch die Verwendung dynamischer Parameter erhöhen.

Insbesondere ermöglicht dieser Ansatz eine Nutzung zertifikatsbasierter Authentisierung im Kontext des http Protokolls.

Mittels der Erfindung kann der Sender beispielsweise eine Authentisierung bzw. eine Authentisierungsanfragenachricht an einen Empfänger schicken, wobei die Authentisierung bzw. eine Authentisierungsanfragenachricht mittels des http Protokolls erfolgt und vorzugsweise die Vorgaben des RFC 2617 einhält. Entsprechend handelt es sich bei der Authentisierungsanfragenachricht um eine Authentisierungsanfragenachricht nach dem RFC 2617.

Mittels der Erfindung kann der Empfänger beispielsweise den Sender authentifizieren bzw. eine Authentifizierungsnachricht an den Sender schicken, wobei das Authentifizieren bzw. eine Authentifizierungsnachricht mittels des http Protokolls erfolgt und vorzugsweise die Vorgaben des RFC 2617 einhält. Entsprechend handelt es sich bei der Authentifizierungsnachricht um eine Authentifizierungsnachricht nach dem RFC 2617.

In der Fig. 1 ist beispielhaft eine Authentifizierung des Senders/Clients mittels des http Protokolls dargestellt. Zunächst schickt der Sender eine erste Nachricht M1, z. B. in Form einer Anfrage (z. B. ein http request wie GET), an den Empfänger. Der Empfänger antwortet auf die erste Nachricht M1 mit einer zweiten Nachricht M2, dass sich der Sender beim Empfänger authentisieren muss. Die zweite Nachricht M2 umfasst beispielsweise eine http 401 Unauthorized Parameter mit einen WWW-Authenticate: Basic realm=ForgottenRealms.

Daraufhin erzeugt der Sender eine dritte Nachricht M3, die beispielsweise eine Authentisierungsanfragenachricht ist, und übermittelt sie dem Empfänger E. Hierbei werden durch den Sender in den Anmeldedaten das digitales Zertifikat C_A und Anmeldezusatzparameter in Form eines Zeitstempels TS gespeichert. Um den Zeitstempel TS zu ermitteln, wird z. B. die lokale Uhr des Senders angefragt. Der Abfragezeitpunkt ist dabei z. B. der Zeitpunkt, zu dem Sender die erste Nachricht M2 erhalten hat, oder der Zeitpunkt, zu dem die Anmeldedaten ermittelt werden. Vorzugsweise wird das digitale Zertifikat C_A vor dem Speichern in den Anmeldedaten Base64 encodiert. Anhand der Anmeldedaten wird dann die Nutzeridentifikation berechnet, welche ebenfalls base64 encodiert wird.

Anschließend berechnet der Sender S über die Nutzeridentifikation eine digitale Signatur unter Zuhilfenahme des privaten Schlüssels. Danach wird der Passwortdatensatz anhand der digitalen Signatur ermittelt, wobei der Passwortdatensatz einen passworterzeugungsspezifische Zusatzparameter umfasst, der angibt, welche Hashfunktion (z. B. SHA256) verwendet wurde, um die digitale Signatur zu berechnen. Die digitale Signatur und/oder passworterzeugungsspezifische Zusatzparameter werden vorzugsweise base64 encodiert und danach beispielsweise im Passwortdatensatz gespeichert. Der Passwortdatensatz, mit der (encodierten) digitale Signatur und dem (encodierten) passworterzeugungsspezifischen Zusatzparameter, sowie die encodierte Nutzeridentifikation werden in der dritten Nachricht M3, die beispielsweise eine Authentisierungsanfragenachricht ist, gespeichert und dann an den Empfänger E übermittelt.

Nach dem Empfang der dritten Nachricht M3 durch den Empfänger E decodiert der Empfänger zunächst die encodierte Nutzeridentifikation sowie die encodierte digitale Signatur und den encodierten passworterzeugungsspezifischen Zusatzparameter anhand des base64 Formates. Anschließend wird das in der Nutzeridentifikation gespeicherte digitale Zertifikat anhand des base64 Formates decodiert. Der Empfänger E überprüft nun zunächst das Zertifikat und vergleicht den Zeitstempel TS mit seiner lokalen Uhrzeit. Das Ergebnis dieser Prüfung wird beispielsweise in dem Prüfergebnis oder in einem weiteren Prüfergebnis gespeichert. Die Prüfung gilt als erfolgreich, wenn das Zertifikat erfolgreich verifiziert werden konnte und der Zeitstempel TS von der lokalen Uhrzeit keine Abweichung aufweist oder eine Abweichung aufweist, die einen vorgegebenen Toleranzwert nicht überschreitet.

Ist diese Prüfung nicht erfolgreich, wird der Sender nicht authentifiziert. Gibt das Prüfergebnis oder das weitere Prüfergebnis an, dass die Prüfung erfolgreich war, wird beispielsweise zunächst die digitale Signatur aus dem Passwortdatensatz entsprechend des base64 Formates decodiert.

Die digitale Signatur wird dann unter Verwendung des digitalen Zertifikates in Verbindung mit der durch den passworterzeugungsspezifischen Zusatzparameter angegebenen Hashfunktion (z. B. SHA256) überprüft. Das Ergebnis dieser Überprüfung kann im Prüfergebnis gespeichert werden oder in einem weiteren Prüfergebnis gespeichert werden. Ist diese Prüfung nicht erfolgreich, wird der Sender nicht authentifiziert. Gibt das Prüfergebnis oder das weitere Prüfergebnis an, dass die Prüfung erfolgreich war, wird der Sender S z. B. mittels einer vierten Nachricht M4 (z. B. durch die Authentifizierungsnachricht) durch den Empfänger E authentifiziert.

Mit anderen Worten wird beispielsweise in Fig. 1 gezeigt, wie der Empfänger (Server) die Bestandteile des Authorization Headers verifiziert. Dazu prüft der Empfänger beispielsweise das übermittelte Zertifikat nach den bekannten Regeln (Gültigkeit, Aussteller, Rückweisungsstatus, etc.). Zusätzlich prüft der Empfänger E beispielsweise bei Übermittlung des Zeitstempels TS, ob dieser in einem vorgegebenen Intervall liegt. In Abhängigkeit von der Security Policy kann beispielsweise so eine Drift zwischen den lokalen Uhren zumindest teilweise kompensiert werden. Weiterhin prüft der Empfänger beispielsweise unter Nutzung des Zertifikates des Senders, ob die Signatur anhand der Nutzeridentifikation validiert werden kann.

Nachfolgend wird eine Liste aufgeführt, welche beispielshaft mögliche Implementierungsvarianten der Anmeldedaten zeigt:

### 1. Anmeldedaten = öffentlicher Schlüssel (PubKeyA)

Vorteilhaft an dieser Implementierungsvariante ist, dass z. B. eine Nutzung zertifikatsbasierter Authentisierung im Kontext des http Protokolls ermöglicht wird.

### 2. Anmeldedaten = öffentlicher Schlüssel (PubKeyA) mit Anmeldezusatzparametern {Zeitstempel TS oder/und Nonce N oder/und gerätespezifischer Parameter}

Vorteilhaft an dieser Implementierungsvariante ist, dass ein öffentlicher Schlüssel mit Anmeldezusatzparametern verwendet wird. Dies führt beispielsweise in das Verfahren eine dynamische Komponente ein, durch die insbesondere ein Wiedereinspielen abgehörter Parameter detektiert werden kann. Wird bei den Anmeldezusatzparametern beispielsweise ein Zeitstempel TS verwendet, sind der Sender und der Empfänger vorzugsweise zeitsynchronisiert.

### 3. Anmeldedaten = digitales Zertifikat C_A

Vorteilhaft an dieser Implementierungsvariante ist, dass der Empfänger beispielsweise die Identität des Senders anhand des digitalen Zertifikats C_A prüfen kann, wenn der Empfänger der ausgebenden Stelle (Certification Authority) des Zertifikates vertraut.

### 4. Anmeldedaten = digitales Zertifikat C_A mit Anmeldezusatzparametern {Zeitstempel TS oder/und Nonce N oder/und gerätespezifischer Parameter}

Vorteilhaft an dieser Implementierungsvariante ist, dass der Empfänger beispielsweise den Sender identifizieren kann - so wie das z. B. unter Implementierungsvariante 3 erläutert ist. Wird bei den Anmeldezusatzparametern beispielsweise ein Zeitstempel TS verwendet, sind der Sender und der Empfänger vorzugsweise zeitsynchronisiert. Dank der zusätzlichen dynamischen Anmeldezusatzparameter (Zeitstempel TS oder/und Nonce N) im Verfahren, kann durch diese z. B. ein Wiedereinspielen abgehörter Parameter detektiert werden.

### 5. Anmeldedaten = Seriennummer SN_C_A mit Anmeldezusatzparametern {Aussteller oder/und Zeitstempel TS oder/und Nonce N oder/und gerätespezifischer Parameter}

Bei dieser Implementierungsvariante ist das Zertifikat C_A beim Empfänger bekannt, sodass anstatt des Zertifikates z. B. auch die Seriennummer des Zertifikates zur Identifikation genutzt werden. In diesem Fall ist vorzugsweise auch der Aussteller des Zertifikates z. B. in den Anmeldezusatzparametern angegeben. Vorzugsweise kennt der Empfänger das entsprechende digitale Zertifikat C_A. Durch die Nutzung der Seriennummer anstatt des Zertifikates wird z. B. der zu transportierende Parameter der Anmeldezusatzparameter kleiner, sodass Bandbreite und/oder Speicherplatz gespart werden kann. Diese Variante kann z. B. bei wiederholten Anfragen genutzt werden, wenn der Empfänger das Zertifikat des Senders bei einer ersten Abfrage/Authentifizierungsnachricht oder per Konfiguration gespeichert hat.

### 6. Anmeldedaten = Fingerprint [C_A] mit Anmeldezusatzparametern {Zeitstempel TS oder/und Nonce N oder/und gerätespezifischer Parameter}

Bei dieser Implementierungsvariante ist das Zertifikat C A beim Empfänger bekannt. Allerdings kann anstatt des Zertifikates auch eine Prüfsumme (z. B. ein Fingerprint in Form eines Hashes (z. B. SHA-256)) des Zertifikates C_A zur Identifikation genutzt werden. Es ist beispielsweise dabei nicht notwendig, den Aussteller des digitalen Zertifikates C_A anzugeben. Vorzugsweise ist dem Empfänger das digitale Zertifikat bereits bekannt. Durch die Nutzung des Fingerprints/Prüfsumme anstatt des Zertifikates wird z. B. der zu transportierende Parameter der Anmeldezusatzparameter kleiner, sodass Bandbreite und/oder Speicherplatz gespart werden kann. Diese Variante kann z. B. bei wiederholten Anfragen genutzt werden, wenn der Empfänger das Zertifikat des Senders bei einer ersten Abfrage/Authentifizierungsnachricht oder per Konfiguration gespeichert hat.

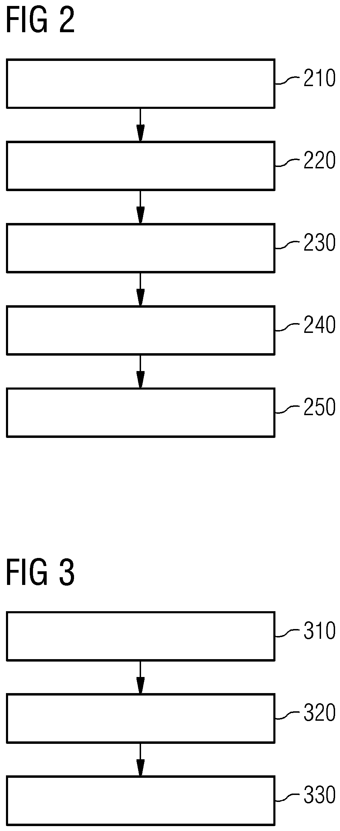

Die Fig. 2 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein computerimplementiertes Verfahren zum Authentisieren eines Senders dargestellt, wobei das Verfahren beispielsweise ein Verfahren nach dem http Protokoll ist und vorzugsweise ein Verfahren nach dem http Protokoll nach RFC 2617 ist.

Das Verfahren umfasst einen ersten Verfahrensschritt 210 zum Speichern eines asymmetrischen Schlüsselpaars, wobei das Schlüsselpaar einen öffentlichen Schlüssel und einen privaten Schlüssel umfasst.

Das Verfahren umfasst einen zweiten Verfahrensschritt 220 zum Erzeugen einer Nutzeridentifikation anhand von Anmeldedaten, wobei die Anmeldedaten den öffentlichen Schlüssel und/oder Zertifikatsdaten eines digitalen Zertifikats umfassen.

Das Verfahren umfasst einen dritten Verfahrensschritt 230 zum Berechnen einer digitalen Signatur über die Nutzeridentifikation unter Verwendung des privaten Schlüssels, wobei ein Passwortdatensatz anhand der digitalen Signatur zu berechnet wird.

Das Verfahren umfasst einen vierten Verfahrensschritt 240 zum Erzeugen einer Authentisierungsanfragenachricht, wobei die Authentisierungsanfragenachricht die Nutzeridentifikation und den Passwortdatensatz umfasst.

Das Verfahren umfasst einen fünften Verfahrensschritt 250 zum Übermitteln der Authentisierungsanfragenachricht an einen Empfänger.

Die Fig. 3 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein computerimplementiertes Verfahren zum Authentifizieren eines Senders dargestellt, wobei das Verfahren beispielsweise ein Verfahren nach dem http Protokoll ist und vorzugsweise ein Verfahren nach dem http Protokoll nach RFC 2617 ist.

Das Verfahren umfasst einen ersten Verfahrensschritt 310 zum Empfangen einer Authentisierungsanfragenachricht von einem Sender, wobei die Authentisierungsanfragenachricht eine Nutzeridentifikation und einen Passwortdatensatz umfasst.

Das Verfahren umfasst einen zweiten Verfahrensschritt 320 zum Ermitteln eines Prüfergebnisses für die digitale Signatur des Passwortdatensatzes anhand der Nutzeridentifikation.

Das Verfahren umfasst einen dritten Verfahrensschritt 330 zum Authentifizieren des Senders anhand des Prüfergebnisses mittels einer Authentifizierungsnachricht.

Ein nicht in einer Figur dargestelltes Ausführungsbeispiel betrifft ein computerimplementiertes Verfahren, wobei das Verfahren, das Verfahren das in Fig 2 dargestellt ist und das Verfahren, das in Figur 3 dargestellt ist, umfasst. Das Ausführungsbeispiel des Verfahrens, das nicht in einer Figur dargestellt ist, ist vorzugsweise ein Verfahren nach dem http Protokoll und vorzugsweise ein Verfahren nach dem http Protokoll nach RFC 2617.

Obwohl die Erfindung im Detail durch die Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. System aufweisend:
- einen Sender umfassend:
- einen Sicherheitsspeicher, wobei
- der Sicherheitsspeicher dazu eingerichtet ist, ein asymmetrisches Schlüsselpaar zu speichern,
- das Schlüsselpaar einen öffentlichen Schlüssel und einen privaten Schlüssel umfasst;
- ein Nutzeridentifikationsgenerierungsmodul, wobei
- das Nutzeridentifikationsgenerierungsmodul dazu eingerichtet ist, eine Nutzeridentifikation anhand von Anmeldedaten zu erzeugen,
- die Anmeldedaten den öffentlichen Schlüssel und/oder Zertifikatsdaten eines digitalen Zertifikats umfassen;
- ein Passwortgenerierungsmodul, wobei
- das Passwortgenerierungsmodul dazu eingerichtet ist, eine digitale Signatur über die Nutzeridentifikation unter Verwendung des privaten Schlüssels zu berechnen,
- das Passwortgenerierungsmodul dazu eingerichtet ist, einen Passwortdatensatz anhand der digitalen Signatur zu erzeugen;
- ein Authentisierungsanfragemodul, wobei
- das Authentisierungsanfragemodul dazu eingerichtet ist, eine Authentisierungsanfragenachricht zu erzeugen,
- die Authentisierungsanfragenachricht die Nutzeridentifikation und den Passwortdatensatz umfasst;
- ein erstes Kommunikationsmodul, wobei das erste Kommunikationsmodul dazu eingerichtet ist, die Authentisierungsanfragenachricht an einen Empfänger zu übermitteln;
- den Empfänger umfassend:
- ein zweites Kommunikationsmodul, wobei das zweite Kommunikationsmodul dazu eingerichtet ist, die Authentisierungsanfragenachricht von dem Sender zu empfangen;
- ein Überprüfungsmodul, wobei
- das Überprüfungsmodul dazu eingerichtet ist, ein Prüfergebnis für die digitale Signatur des Passwortdatensatzes anhand der Nutzeridentifikation zu ermitteln;
- ein Authentifizierungsmodul, wobei
- das Authentifizierungsmodul dazu eingerichtet ist, anhand des Prüfergebnisses mit einer Authentifizierungsnachricht den Sender zu authentifizieren.

2. System nach Anspruch 1, wobei
- die Anmeldedaten Anmeldezusatzparameter umfassen,
- die Anmeldezusatzparameter einen Zeitstempel und/oder eine Nonce oder/und gerätespezifische Senderparameter umfassen.

3. System nach einem der vorhergehenden Ansprüche, wobei
- die Zertifikatsdaten das digitale Zertifikat und/oder eine Seriennummer des digitalen Zertifikats oder/und einen Zeitstempel und/oder eine Nonce oder/und gerätespezifische Senderparameter und/oder einen Fingerprint des digitalen Zertifikats, wie eine Prüfsumme, umfassen.

4. System nach einem der vorhergehenden Ansprüche, wobei
- die Anmeldedaten durch den Sender berechnet werden,
- die Anmeldedaten unter der Berücksichtigung eines Zeitstempels und/oder einer Nonce oder/und gerätespezifischer Senderparameter gebildet werden,
- beispielsweise die Anmeldedaten spezifisch für eine entsprechende Authentisierungsanfragenachricht neu berechnet werden.

5. System nach einem der vorhergehenden Ansprüche, wobei das digitale Zertifikat ein digitales Zertifikat für den öffentlichen Schlüssel ist.

6. System nach einem der vorhergehenden Ansprüche, wobei
- der Passwortdatensatz passworterzeugungsspezifische Zusatzparameter umfasst und/oder die digitale Signatur unter Berücksichtigung zumindest eines Teils der Zusatzparameter berechnet wird,
- die passworterzeugungsspezifischen Zusatzparameter Angaben über einen Hash-Algorithmus der digitalen Signatur und/oder ein Paddingschema der digitalen Signatur und/oder einen Zeitstempel umfassen.

7. System nach einem der vorhergehenden Ansprüche, wobei der Sender und der Empfänger zeitsynchronisiert sind.

8. System nach einem der vorhergehenden Ansprüche, wobei zusätzlich bei der Ermittlung des Prüfergebnisses der Zeitstempel und/oder die gerätespezifischen Senderparameter und/oder die Zertifikatsdaten überprüft werden.

9. Sender aufweisend:
- einen Sicherheitsspeicher, wobei
- der Sicherheitsspeicher dazu eingerichtet ist, ein asymmetrisches Schlüsselpaar zu speichern,
- das Schlüsselpaar einen öffentlichen Schlüssel und einen privaten Schlüssel umfasst;
- ein Nutzeridentifikationsgenerierungsmodul, wobei
- das Nutzeridentifikationsgenerierungsmodul dazu eingerichtet ist, eine Nutzeridentifikation anhand von Anmeldedaten zu erzeugen,
- die Anmeldedaten den öffentlichen Schlüssel und/oder Zertifikatsdaten eines digitalen Zertifikats umfassen;
- ein Passwortgenerierungsmodul, wobei
- das Passwortgenerierungsmodul dazu eingerichtet ist, eine digitale Signatur über die Nutzeridentifikation unter Verwendung des privaten Schlüssels zu berechnen,
- das Passwortgenerierungsmodul dazu eingerichtet ist, einen Passwortdatensatz der digitalen Signatur zu erzeugen;
- ein Authentisierungsanfragemodul, wobei
- das Authentisierungsanfragemodul dazu eingerichtet ist, eine Authentisierungsanfragenachricht zu erzeugen,
- die Authentisierungsanfragenachricht die Nutzeridentifikation und den Passwortdatensatz umfasst;
- ein erstes Kommunikationsmodul, wobei das erste Kommunikationsmodul dazu eingerichtet ist, die Authentisierungsanfragenachricht an einen Empfänger zu übermitteln.

10. Empfänger aufweisend:
- ein zweites Kommunikationsmodul, wobei
- das zweite Kommunikationsmodul dazu eingerichtet ist, eine Authentisierungsanfragenachricht von einem Sender zu empfangen,
- die Authentisierungsanfragenachricht eine Nutzeridentifikation und einen Passwortdatensatz umfasst;
- ein Überprüfungsmodul, wobei
- das Überprüfungsmodul dazu eingerichtet ist, ein Prüfergebnis für die digitale Signatur des Passwortdatensatzes anhand der Nutzeridentifikation zu ermitteln;
- ein Authentifizierungsmodul, wobei
- das Authentifizierungsmodul dazu eingerichtet ist, anhand des Prüfergebnisses mit einer Authentifizierungsnachricht den Sender zu authentifizieren.

11. Computerimplementiertes Verfahren zum Authentisieren eines Senders mit folgenden Schritten:
- Speichern eines asymmetrischen Schlüsselpaars, wobei das Schlüsselpaar einen öffentlichen Schlüssel und einen privaten Schlüssel umfasst;
- Erzeugen einer Nutzeridentifikation anhand von Anmeldedaten, wobei die Anmeldedaten den öffentlichen Schlüssel und/oder Zertifikatsdaten eines digitalen Zertifikats umfassen;
- Berechnen einer digitalen Signatur über die Nutzeridentifikation unter Verwendung des privaten Schlüssels, wobei ein Passwortdatensatz anhand der digitalen Signatur zu ermittelt wird;
- Erzeugen einer Authentisierungsanfragenachricht, wobei die Authentisierungsanfragenachricht die Nutzeridentifikation und den Passwortdatensatz umfasst;
- Übermitteln der Authentisierungsanfragenachricht an einen Empfänger.

12. Computerimplementiertes Verfahren zum Authentifizieren eines Senders mit folgenden Schritten:
- Empfangen einer Authentisierungsanfragenachricht von einem Sender, wobei die Authentisierungsanfragenachricht eine Nutzeridentifikation und einen Passwortdatensatz umfasst;
- Ermitteln eines Prüfergebnisses für die digitale Signatur des Passwortdatensatzes anhand der Nutzeridentifikation;
- Authentifizieren des Senders anhand des Prüfergebnisses mittels einer Authentifizierungsnachricht.

13. Computerimplementiertes Verfahren nach den Ansprüchen 11 und 12.

14. Computerprogrammprodukt mit Programmbefehlen zur Durchführung des Verfahrens nach einem der Ansprüche 11 - 13.

15. Bereitstellungsvorrichtung für das Computerprogrammprodukt nach Anspruch 14, wobei die Bereitstellungsvorrichtung das Computerprogrammprodukt speichert und/oder bereitstellt.
